(19) Europäisches Patentamt
European Patent Office
Office européen des brevets

(11) Publication number: **0 145 328 B1**

(12) **EUROPEAN PATENT SPECIFICATION**

(45) Date of publication of patent specification: **16.05.90**

(51) Int. Cl.$^5$: **C 07 F 9/6524,** A 01 N 57/08

(21) Application number: **84307910.4**

(22) Date of filing: **14.11.84**

(54) **Substituted tetrazolinones.**

(30) Priority: **16.11.83 US 552573**
**27.09.84 US 655477**

(43) Date of publication of application:
**19.06.85 Bulletin 85/25**

(45) Publication of the grant of the patent:
**16.05.90 Bulletin 90/20**

(84) Designated Contracting States:
**DE FR GB IT NL**

(56) References cited:
**US-A-3 780 053**

(73) Proprietor: **UNIROYAL CHEMICAL COMPANY, Inc.**
**World Headquarters**
**Middlebury Connecticut 06749 (US)**

(72) Inventor: **Covey, Rupert A.**
**112, Lebanon Road**
**Bethany New Haven Connecticut (US)**
Inventor: **Moore, Richard C.**
**5 Jones Road Wallingford**
**New Haven Connecticut 06492 (US)**

(74) Representative: **Harrison, Michael Robert et al**
**URQUHART-DYKES & LORD 5th Floor Tower House Merrion Way**
**Leeds LS2 8PA West Yorkshire (GB)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The compounds of this invention are tetrazolinones having the structural formula

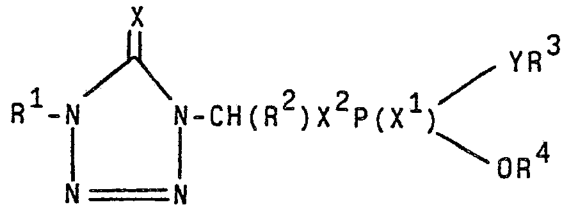

(I)

where X, $X^1$ and $X^2$ are the same or different and are oxygen or sulfur; Y is oxygen, sulfur of NH; $R^1$ is $C_1$—$C_{12}$ alkyl, $C_7$—$C_9$ aralkyl, $C_2$—$C_4$ alkenyl, phenyl, phenyl substituted with halogen, $C_1$—$C_4$ alkyl, $C_1$—$C_2$ haloalkyl, $C_1$—$C_4$ alkoxy, $C_1$—$C_4$ haloalkoxy, $C_1$—$C_4$ alkylthio, $C_1$—$C_4$ haloalkylthio, $C_2$—$C_5$ alkoxycarbonyl, phenoxy, nitro or cyano, phenoxy substituted with halogen, $C_1$—$C_4$ alkyl, $C_1$—$C_2$ haloalkyl, $C_1$—$C_4$ alkoxy, $C_1$—$C_4$ haloalkoxy, $C_1$—$C_4$ alkylthio, $C_1$—$C_4$ haloalkylthio, $C_2$—$C_5$ alkoxycarbonyl, nitro or cyano or $C_7$—$C_9$ aralkyl substituted on the phenyl ring with halogen, $C_1$—$C_4$ alkyl, $C_1$—$C_2$ haloalkyl, $C_1$—$C_4$ alkoxy, methylenedioxy, nitro or cyano; $R^2$ is hydrogen, $C_1$—$C_4$ alkyl, phenyl or phenyl substituted with $C_1$—$C_4$ alkyl, $C_1$—$C_4$ alkoxy, methylenedioxy, halogen, nitro or cyano; and $R^3$ and $R^4$ may be the same or different and are $C_1$—$C_4$ alkyl. Preferably, $X^2$ is sulfur, $R^1$ is $C_1$—$C_8$ alkyl, $C_7$—$C_8$ aralkyl, phenyl, allyl, phenyl substituted with fluorine, chlorine, bromine, $C_1$—$C_4$ alkyl, $C_1$—$C_3$ alkoxy, phenoxy, nitro, cyano, trihalomethyl, methylthio or trichloromethylthio, phenoxy substituted with $C_1$—$C_4$ alkyl, trifluoromethyl, methoxy, methylthio, fluorine, chlorine, nitro or cyano or benzyl substituted with $C_1$—$C_2$ alkyl, fluorine, chlorine, bromine, $C_1$—$C_2$ alkoxy, trifluoromethyl, methylenedioxy, nitro or cyano, $R^2$ is hydrogen, $C_1$—$C_4$ alkyl, phenyl or phenyl substituted with $C_1$—$C_2$ alkyl, $C_1$—$C_2$ alkoxy, methylenedioxy, fluorine, chlorine, bromine, nitro or cyano; $R^3$ and $R^4$ are the same or different and are $C_1$—$C_3$ alkyl, and Y is oxygen or sulfur. Most preferably X and Y oxygen; $R^1$ is $C_1$—$C_4$ alkyl, benzyl, phenyl or phenyl substituted with fluorine, chlorine, methyl, methoxy, nitro, cyano or trifluoromethyl; $R^2$ is hydrogen; $R^3$ and $R^4$ are the same or different $C_1$—$C_3$ alkyl, and Y is oxygen or sulfur. Particularly preferred compounds are those in which $X^1$ is sulfur.

The above compounds are useful as pesticides especially in the control of insects and, for certain compounds, mites. As an insecticide, the definitions of the substituents given above apply. That is, the compounds defined above are useful in the control of insects with the preferred and most preferred compound similarly preferred and most preferred as insecticides. In the case where the compounds of this invention are employed as miticides it is preferred that the compound of this invention (compound I) include substituents which have the following meanings: $R^1$ is benzyl, phenyl, 2-fluorophenyl, 3-chlorophenyl, 4-iodophenyl, phenoxyphenyl or ethoxycarbonylphenyl; $R^2$ is hydrogen, methyl or phenyl; $R^3$ and $R^4$ are the same or different and are methyl or ethyl; $X^1$ and $X^2$ are both sulfur; and Y is oxygen. Even more preferably, the compounds of this invention useful as a miticide are defined by $R^1$ being benzyl, phenyl or ethoxycarbonylphenyl; and $R^2$ being hydrogen or phenyl.

A reference of interest in Japanese Patent Publication No. 36049, Sept. 14, 1982, in which certain substituted 5-oxotriazolinemethylphosphoro dithioates have insecticidal and miticidal activity are disclosed.

US—A—3780053 discloses 5-oxotriazolin phosphorous derivatives useful as insecticides, acaricides and anthelmintics.

The chemicals of this invention can be prepared by using as starting materials 1-substituted-5(4H)tetrazolinones. These compounds are known and can be prepared by known procedures. For example, 1-phenyl-5(4H)-tetrazolinone can be prepared by the method of Horwitz et al, J.A.C.S. *81* 3076 (1959), by reacting phenylisocyanate with sodium azide in the presence of aluminum chloride. Alternatively, it can be prepared by reacting phenyl isocyanate with trimethylsilyl azide; see Tsuge et al, J. Org. Chem. *45* 5130 (1980).

The compounds of this invention may be prepared by reacting the selected 1-substituted-5(4H)tetrazolinone with an aldehyde and thionyl chloride to give the chloroalkyl derivative having the formula

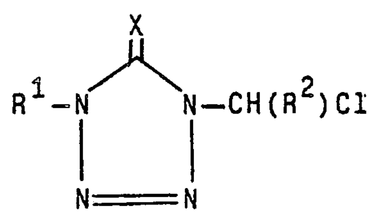

(II)

where $R^1$ and $R^2$ and X have the meaning given for compound I. Compound II is reacted with a compound having the formula

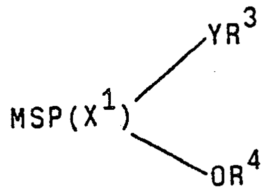

(III)

where M is a cation based on an alkali metal or ammonia and $R^3$ and $R^4$ are the same or different and are $C_1$—$C_4$ alkyl, and $X^1$ and Y have the above meanings.

The aldehyde should be present in an amount at least equivalent to the tetrazolinone or about up to one equivalent excess. At least one equivalent and up to one equivalent excess of thionylchloride should be employed. In any case, an amount of thionylchloride at least equivalent to the amount of aldehyde should be used, and preferably in a 10% molar excess.

The first step of the process is carried out at a temperature between 0° and 130°C, preferably between 70° and 120°C. Generally a solvent inert to the reactants is used. Suitable solvents for the reaction are ethers, such as diethylether, diisopropylether, dioxane, dimethoxyethane and tetrahydrofuran; amides, such as N,N-dialkylated carboxamides; aliphatic, aromatic and halogenated hydrocarbons, such as hexane, benzene, toluene, xylene, methylene chloride, chloroform, carbon tetrachloride, and chlorobenzene; nitriles, such as acetonitrile; and dimethylsulfoxide.

In the second step of the process, a salt of the O,O-dialkyldithiophosphate, such as the sodium, potassium or ammonium salt, is employed. The salt can be used in equivalent amount or up to 50% excess based on the chloroalkyl intermediate. The reaction is carried out at a temperature from −20° to 100°C, preferably from room temperature to 50° and in a suitable solvent, such as one of those listed above, or in a ketone solvent such as acetone or methyl ethyl ketone. In addition, alcohols such as methyl or ethyl alcohol can be used successfully.

Example 1

Preparation of 4-chloromethyl-1-phenyl-5(4H)-tetrazolinone

A mixture of 7.7 g (0.0475 mol) of 1-phenyl-5(4H)-tetrazolinone, 2.1 g (0.07 mol) of paraformaldehyde and 5.8 ml (9.5 g, 0.08 mol) of thionyl chloride in 40 ml of toluene was heated to 75—80°C whereupon evolution of HCl took place. Heating was continued for another 1.25 hours, during which time the temperature rose to 110°C. The solution was decanted and the remaining solid was washed with a small amount of toluene. The toluene solutions were combined and concentrated under reduced pressure. The last traces of solvent were removed by warming to 40°C at 0.2 mm Hg pressure, giving a yellow oil, wt. 10.43 g. This was taken up in ether and the solution filtered. The filtrate was concentrated under reduced pressure and finally warmed to 40°C at 0.15 mm Hg pressure. The resulting product (9.7 g; 97%) was a thick yellow oil. The infra red (IR) spectrum indicated carboxyl absorption at 1740 $cm^{-1}$ (rather than 1710 $cm^{-1}$ for the starting material). Nuclear magnetic resonance (NMR) analysis showed a sharp singlet at 5.6 ppm.

Example 2

Preparation of 4-(1-chloroethyl)-1-phenyl-5(4H)-tetrazolinone

To a suspension of 2.5 g (0.015 mol) of 1-phenyl-5(4H)-tetrazolinone in 15 ml of toluene were added 1.4 ml (1.1 g, 0.025 mol) of acetaldehyde and 2.0 ml (3.3 g, 0.028 mol) of thionyl chloride. The mixture was heated to 70—75°C, at which temperature hydrogen chloride gas was evolved. Heating was continued for 1.5 hrs. at 80—85°C. The HCl evolution subsided during this time, and most of the solid dissolved. The mixture was filtered and the filtrate evaporated to dryness. The oil was taken up in diethyl ether, the solution filtered and the solvent removed from the filtrate, wt. 3.15 g (93%). The structure was confirmed by the IR and NMR analyses.

Example 3

Preparation of O,O-Diethyl S-[1-phenyl-5(4H)-tetrazolinone-4-methyl] phosphorodithioate (Cpd. No. 1)

To 2.4 g (0.0114 mol) of 4-chloromethyl-1-phenyl-5(4H)-tetrazolinone (of Example 1) in 25 ml of acetonitrile was added 3.7 g (0.0182 mol) of ammonium O,O-diethyldithiophosphate, and the mixture was warmed to 40—50°C for two hours, during which time a white precipitate was formed. This was removed by filtration, and the filtrate was evaporated to dryness. Toluene was added, and the mixture was extracted three times with 15 ml portions of water. The toluene solution was dried with anhyrous magnesium sulfate and concentrated on a rotary evaporator. The residue was then stripped of solvent at 49° (0.15 mm Hg) giving 3.49 (85% yield) of a yellow oil which was identified as the product by IR and NMR analyses.

Example 4

Preparation of O,O-Diethyl S-[1-phenyl-5(4H)-tetrazolinone-4-(1-ethyl)]phosphorodithioate (Cpd. No. 2)

4-(1-chloroethyl-1-phenyl-5(4H)-tetrazolinone (of Example 2) (3.0 g, 0.013 mol) of ammonium O,O-diethyldithiophosphate were combined in 25 ml of acetonitrile, and the mixture was heated for 1 hour at 40—45°C and then stirred for 2 hours at room temperature. The reaction mixture was filtered and the filtrate evaporated to dryness. The residual oil was taken up in toluene, the solution filtered in order to remove some insoluble solid, and the filtrate was washed three times with 15 ml portions of water. The toluene

solution was dried over anhydrous magnesium sulfate, and the solvent was removed at 40°C and 0.15 mm Hg pressure; wt. 3.15 g (64% yield) of a yellow oil. The structure was confirmed by IR and NMR analyses.

Example 5

Compounds No. 3—27

Additional compounds were prepared applying essentially the experimental approach previously described, all compounds were analyzed for determination of their key structural configuration and functional groups. The analytical determinations were substantially confirmed by nuclear magnetic resonance and infrared methods. These compounds are listed in Table I.

TABLE I

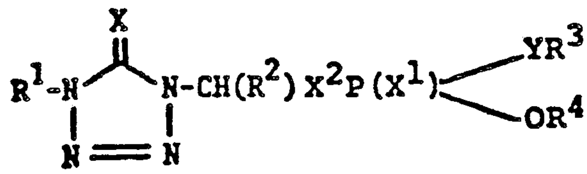

| Cpd. No. | $R^1$ | $R^2$ | $R^3$ | $R^4$ | X | $X^1$ | Y | $X^2$ |
|---|---|---|---|---|---|---|---|---|
| 3 | $n-C_8H_{17}$ | H | $C_2H_5$ | $C_2H_5$ | O | S | O | S |
| 4 | $CH_2C_6H_5$ | H | " | " | " | " | " | S |
| 5 | $C_6H_5$ | H | $CH_3$ | $CH_3$ | " | O | S | S |
| 1 | " | H | $C_2H_5$ | $C_2H_5$ | " | S | O | S |
| 2 | " | $CH_3$ | " | " | " | " | " | S |
| 6 | " | $C_6H_5$ | " | " | " | " | " | S |
| 7 | $2-F-C_6H_4$ | H | " | " | " | " | " | S |
| 8 | $2-Cl-C_6H_4$ | " | " | " | " | " | " | S |
| 9 | $3-Cl-C_6H_4$ | " | " | " | " | " | " | S |
| 10 | $4-Cl-C_6H_4$ | " | " | " | " | " | " | S |
| 11 | $3,4-Cl_2-C_6H_3$ | " | " | " | " | " | " | S |
| 12 | $2,4,5-Cl_3-C_6H_2$ | " | " | " | " | " | " | S |
| 13 | $4-I-C_6H_4$ | " | " | " | " | " | " | S |
| 14 | $4-CH_3-C_6H_4$ | " | " | " | " | " | " | S |
| 15 | $3,4-(CH_3)_2-C_6H_3$ | " | " | " | " | " | " | S |
| 16 | $2,4,6-(CH_3)_3-C_6H_2$ | " | " | " | " | " | " | S |
| 17 | $3-CF_3-C_6H_4$ | " | " | " | " | " | " | S |
| 18 | $4-CH_3O-C_6H_4$ | " | " | " | " | " | " | S |
| 19 | $2,4-(CH_3O)_2-C_6H_3$ | " | " | " | " | " | " | S |
| 20 | $2,5-(CH_3O)_2-C_6H_3$ | " | " | " | " | " | " | S |
| 21 | $3,4,5-(CH_3O)_3-C_6H_2$ | " | " | " | " | " | " | S |
| 22 | $2-C_2H_5O-C_6H_4$ | " | " | " | " | " | " | S |
| 23 | $4-C_6H_5O-C_6H_4$ | " | " | " | " | " | " | S |
| 24 | $2-C_2H_5OCO-C_6H_4$ | " | " | " | " | " | " | S |
| 25 | $4-NO_2-C_6H_4$ | " | " | " | " | " | " | S |
| 26 | $C_6H_5$ | " | $i-C_3H_7$ | $i-C_3H_7$ | " | " | " | S |
| 27 | " | " | $n-C_4H_9$ | $n-C_4H_9$ | " | " | " | S |

Further compounds having the above-defined structural formula are prepared essentially in accordance with the procedures of the above examples; the substituents $R^1$, $R^2$, $R^3$, $R^4$, X, $X^1$ and Y having the values indicated in Table II below:

TABLE II

| $R^1$ | $R^2$ | $R^3$ | $R^4$ | X | $X^1$ | $X^2$ | Y |
|---|---|---|---|---|---|---|---|
| $CH_3$ | H | $C_2H_5$ | $C_2H_5$ | O | O | S | NH |
| $4-n-C_4H_9-C_6H_4$ | H | $C_2H_5$ | $C_2H_5$ | O | S | " | O |
| $2-(CH_3O)-5-NO_2-C_6H_3$ | H | $C_2H_5$ | $C_2H_5$ | O | " | " | " |
| $3-CN-C_6H_4$ | H | $C_2H_5$ | $C_2H_5$ | O | " | " | " |
| $4-n-C_4H_9O-C_6H_4$ | H | $C_2H_5$ | $C_2H_5$ | O | " | " | " |
| $C_6H_5$ | $n-C_4H_9$ | $C_2H_5$ | $C_2H_5$ | O | " | " | " |
| $C_6H_5$ | H | $C_2H_5$ | $C_2H_5$ | S | " | " | NH |
| $4-(2-CH_3-4-CN-C_6H_3O)C_6H_4$ | H | $CH_3$ | " | " | " | " | O |
| $3-(3-CH_3O-4-CF_3-C_6H_3O)C_6H_4$ | H | " | $CH_3$ | O | " | " | " |
| $4-(2-CH_3S-4-Cl-C_6H_3O)C_6H_4$ | H | " | " | " | " | " | " |
| $4-(2-F-4-NO_2-C_6H_3O)C_6H_4$ | H | " | " | " | " | " | " |
| $CH_3$ | H | $C_2H_5$ | $C_2H_5$ | O | S | S | O |
| $(CH_3C$ | H | $C_2H_5$ | $C_2H_5$ | O | S | S | O |
| $CH_2=CH$ | $2-CNC_6H_4$ | $C_2H_5$ | $C_2H_5$ | O | S | O | O |
| $CH_2=CHCH_2$ | $3-FC_6H_4$ | $C_2H_5$ | $C_2H_5$ | O | S | S | O |
| $4-Cl-C_6H_4C(CH_3)_2$ | $4-(CH_3)C-C_6H_4$ | $C_2H_5$ | $C_2H_5$ | O | S | S | O |
| $2-F-C_6H_4CH_2$ | $2,5-(CH_3)_2-C_6H_3$ | $C_2H_5$ | $C_2H_5$ | O | S | S | O |
| $3-CH_3-C_6H_4CH_2$ | $4-CH_3O-C_6H_4$ | $C_2H_5$ | $C_2H_5$ | O | S | S | O |
| $4-C_4H_9-C_6H_4CH_2$ | $2-C_4H_9O-C_6H_4$ | $C_2H_5$ | $C_2H_5$ | O | S | S | O |
| $3-CF_3H_6H_4CH_2$ | $4-ClC_6H_4$ | $C_2H_5$ | $C_2H_5$ | O | S | S | O |
| $2-CH_3O-C_6H_4CH_2$ | $3-BrC_6H_4$ | $C_2H_5$ | $C_2H_5$ | O | S | S | O |
| $4-C_4H_9O-C_6H_4CH_2$ | $3-NO_2-C_6H_4$ | $C_2H_5$ | $C_2H_5$ | O | S | S | O |
| $4-ClCH_2CH_2-C_6H_4CH_2$ | $C_6H_5$ | $C_2H_5$ | $C_2H_5$ | O | S | S | O |
| $3,4-CH_2O_2-C_6H_3CH_2$ | H | $C_2H_5$ | $C_2H_5$ | O | S | S | O |
| $4-NO_2-C_6H_4CH_2$ | $4-NO_2C_6H_4$ | $C_2H_5$ | $C_2H_5$ | O | S | S | O |
| $3-CN-C_6H_4CH_2$ | $CH_3$ | $C_2H_5$ | $C_2H_5$ | O | S | S | O |
| $CH_3$ | H | $n-C_3H_7$ | $C_2H_5$ | O | O | S | S |

For practical applications, especially when the compounds are used as pesticides, the compounds can be used alone, or dissolved or suspended in suitable liquid carriers such as water, alcohols, ketones, phenols, toluene or xylenes. Optionally, one or more surface active agents and/or inert diluents can be added. Alternatively, the compounds alone or in combination with one or more liquid carriers may be absorbed onto an inert solid carrier. Thus, the compounds of this invention may be employed as a pesticidal composition in the form of dusts, granules, wettable powders, pastes, emulsifiable concentrates or water soluble solids.

For example, compounds of this invention, employed as pesticides, can be applied as dusts when admixed with or absorbed on powdered solid carriers, such as the various mineral silicates, e.g., mica, talc, pyrophyllite and clays, or as liquids or sprays when in a liquid carrier, as in solution in a suitable solvent such as acetone, benzene or kerosene, or dispersed in a suitable non-solvent medium, for example, water. In protecting plants (the term includes plant parts), the compounds are preferably applied as aqueous emulsions containing a surface-active dispersing agent which may be an anionic, nonionic or cationic surface-active agent. Such surface-active agents are well known and reference is made to U.S. Pat. No. 2,547,724, columns 3 and 4, for detailed examples of the same. The chemicals may be mixed with such surface-active dispersing agents, with or without an organic solvent, as concentrates for subsequent addition of water to make aqueous suspensions of the chemicals of the desired concentration. The compounds may be admixed with powdered solid carriers, such as mineral silicates together with a surface-active dispersing agent so that a wettable powder is obtained which may then be applied directly to loci to be protected, or may be shaken with water to form a suspension of the chemical (and powdered solid carrier) in water for application in that form. Granular formulations of these chemicals are prepared using a granular or pelletized form of carrier such as granular clays, vermiculite, charcoal or corn cobs. Granular formulations are then applied by broadcasting, side dressing, soil incorporation or seed treatment. The chemicals may be applied to loci to be protected by the aerosol method. Solutions for aerosol treatment may be prepared by dissolving the chemical directly in the aerosol carrier which is liquid under pressure but which is a gas at ordinary temperature (e.g., 20°C) and atmospheric pressure, or the aerosol solution may be prepared by first dissolving the chemical in a less volatile solvent and then admixing such solution with the highly volatile liquid aerosol carrier. The compounds may be used admixed with carriers that are active themselves, for example: insecticides, acaricides, fungicides, or bactericides.

The pesticidal formulations of this invention contain amounts of the compounds effective for the particular method of control. These amounts can vary widely; typically, the range is from 0.1 to 95% active ingredient. Spray dilutions can contain from a few parts per million to full strength concentrates applied by ultra low volume techniques. Concentrations per unit area, where plants are the area treated, can vary from 0.01 to 50 kilograms per hectare, and preferably from 0.1 to 10 kilograms per hectare.

To control pests, sprays of the compounds may be applied to the pests directly, to plants upon which they feed, or both. Another effective method of attack involves application of the compounds to the soil or other medium in which insects live.

Harmful insects and mites attack a wide variety of plants, including both ornamental and agricultural plants and inflict damage by consuming foliage, withdrawing vital juices from the plants, secreting toxins and often by transmitting diseases. The compounds utilized in this invention can prevent such damage. The methods of application, and the selection and concentration of these compounds will, of course, vary depending upon such circumstances as area, climate, plant tolerance, etc. One skilled in the art can select the proper approach by simple experiments.

As stated above the compounds of this invention are especially useful as insecticides and miticides. They may be applied to the plant itself (foliar insecticide or miticide) or into the soil (soil insecticide or miticide).

Insecticidal or miticidal activity were determined as described in the following examples.

Example 6

Control of Tobacco Budworm

A mixture was prepared of 0.6 g of compound No. 1, 10 ml acetone, four drops of a surfactant (Tween 20 [trademark]; ethoxylate sorbitan monolaurate) and water (ca. 90 ml) resulting in a solution wherein said compound is present at 6000 parts per million (ppm) concentration. To five plastic cells was added about 5 g of wheat germ/soyflower diet and the diet was impregnated with 0.2 ml of the above solution. Additional cells (five each) were prepared containing said diet and 0.2 ml of a 1,000 ppm and 500 ppm solution of said compound, respectively, and into each cell a tobacco budworm larva was placed. After six days, the cells were inspected and percent control was noted with the following results:

| | | | |
|---|---|---|---|
| Concentration, ppm | 6,000 | 1,000 | 500 |
| Control, % | 80 | 37 | 16 |

The data indicate that the compound (No. 1) of Example 3 was effective against tobacco budworm. Similar results are obtained when employing the compounds listed in Table I.

Example 7

Control of Corn Rootworm

A solution was prepared as described in Example 6 containing the compound No. 1 at a 6,000 ppm concentration. Said solution was further diluted resulting in various concentrations of active ingredient as indicated in the Table below. Two corn seedlings are first soaked for one hour in a flask containing the solution having a certain concentration of active ingredient, and the seedling is transferred to a plastic bag

containing a paper towel which had been treated with 5 ml of the respective same concentration. 18 hours after the bag had been closed, five 3rd instar corn rootworm larvae are placed in each bag, and after six days, the effectiveness of the compound on the corn rootworm larvae was determined. The results are listed below:

| | | | | | |
|---|---|---|---|---|---|
| Concentration, ppm | 1,000 | 500 | 100 | 50 | 20 |
| Control, % | 100 | 100 | 100 | 78 | 78 |

It will be noted that compound No. 1 is a very effective insecticide for the control of corn rootworm.

Example 8

Control of Mites

Following essentially the procedures of the previous examples a solution was prepared containing compound No. 1 at a 1000 ppm concentration. Two 10-day old cow pea plants were sprayed to run-off with that solution and then they were left to dry for one day. Thereafter, 25 mites were placed on each of the two leaves per plant, the mites' area of movement being restricted by a circle of sticky material (Tanglefoot [trademark]). After five days, the effect of the chemical on the mites was observed to be 100% control.

Example 9

Control of Rice Plant Hopper

Two 10-day old rice plants were treated in similar fashion as described in Example 8 except the rice plants were placed under a plastic hood, and ten adult plant hoppers were placed on each plant. The concentrations of active material (compound No. 1) and percent pest control are indicated below:

| | | |
|---|---|---|
| Concentration, ppm | 1,000 | 500 |
| Control, % | 100 | 89 |

Example 10

Control of Tobacco Budworm, Corn Rootworm, Mites and Rice Plant Hopper by Compounds 2—25

Following essentially the testing procedures outlined above, additional compounds of this invention were evaluated. The results are summarized in Table III. It should be noted that the percent control values were obtained at pesticide concentration of 1,000 ppm except otherwise indicated. Also, the abbreviated column headings have these meanings:

MI: mites;
RPH: rice plant hopper;
TBW: tobacco budworm;
CR: corn rootworm.

TABLE III

Percent Control of Mites and Insects

| Cpd. No. | MI | RPH | TBW | CR |
|---|---|---|---|---|
| 1 | 100 | 100 | 37 | 100 |
| 2 | 90 | 100 | 60(1) | 100 |
| 3 | 0 | 94(2) | 0 | 100(2) |
| 4 | 95 | 100 | 80(3) | 100 |
| 5 | 0 | 60 | 20(3) | 100 |
| 6 | 90 | 64(2) | 20(1) | 100 |
| 7 | 80 | 100(2) | 0 | 100(2) |
| 8 | 0 | 100(2) | 0 | 100(2) |
| 9 | 80 | 95 | 20 | 69 |
| 10 | 0 | 80 | 80 | 100 |
| 11 | 0 | 80 | 80(3) | 29 |
| 12 | 0 | 70 | 100(3) | 50(4) |
| 13 | 80 | 60 | 20 | 38 |
| 14 | 0 | 100 | 20(3) | 100 |
| 15 | 0 | 70 | 20(3) | 56 |
| 16 | 0 | 90 | 33(3) | 50(4) |
| 17 | | | | |
| 18 | 0 | 70 | 40(3) | 43 |
| 19 | 0 | - | 0 | 62 |
| 20 | 0 | 40 | 0 | 100(2) |
| 21 | 0 | 70 | 56(3) | 50(4) |
| 22 | 0 | 100(2) | 0 | 100(2) |
| 23 | 30 | 70 | 53(3) | 62 |
| 24 | 90 | 100(2) | 0 | 100(2) |
| 25 | | | | |
| 26 | | | | |
| 27 | | | | |

Remarks: (1) at 6,000 ppm
(2) at 5,000 ppm
(3) at 3,000 ppm
(4) at 500 ppm

The results demonstrate the usefulness of the chemicals of this invention for combatting mites and insects. Similar results are obtained when employing the compounds listed in Table II.

The above description and examples illustrate the scope and spirit of the instant invention. This description and examples will make apparent to those skilled in the art other examples within the scope of this invention. These examples are within the contemplation of this invention. Therefore, the invention should be limited only by the appended claims.

**Claims**

1. A compound characterised in that it has the structural formula

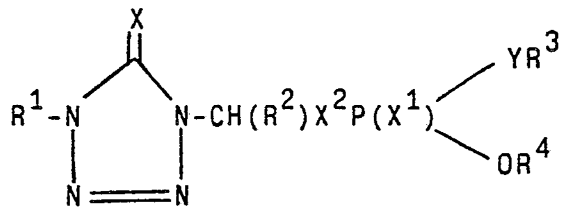

where X, $X^1$ and $X^2$ are the same or different and are oxygen or sulfur; Y is oxygen, sulfur or NH; $R^1$ is $C_1$—$C_{12}$ alkyl, $C_7$—$C_9$ aralkyl, $C_2$—$C_4$ alkenyl, phenyl, phenyl substituted with halogen, $C_1$—$C_4$ alkyl, $C_1$—$C_2$ haloalkyl, $C_1$—$C_4$ alkoxy, $C_1$—$C_4$ haloalkoxy, $C_1$—$C_4$ alkylthio, $C_1$—$C_4$ haloalkylthio, $C_2$—$C_5$ alkoxycarbonyl, phenoxy, nitro or cyano, phenoxy substituted with halogen, $C_1$—$C_4$ alkyl, $C_1$—$C_2$ haloalkyl, $C_1$—$C_4$ alkoxy, $C_1$—$C_4$ haloalkoxy, $C_1$—$C_4$ alkylthio, $C_1$—$C_4$ haloalkylthio, $C_2$—$C_5$ alkoxycarbonyl, nitro or cyano or $C_7$—$C_9$ aralkyl substituted on the phenyl ring with halogen, $C_1$—$C_4$ alkyl, $C_1$—$C_2$ haloalkyl, $C_1$—$C_4$ alkoxy, methylenedioxy, nitro or cyano; $R^2$ is hydrogen, $C_1$—$C_4$ alkyl, phenyl or phenyl substituted with $C_1$—$C_4$ alkyl, $C_1$—$C_4$ alkoxy, methylenedioxy, halogen, nitro or cyano; and $R^3$ and $R^4$ are the same or different and are $C_1$—$C_4$ alkyl..

2. A compound according to claim 1 characterized in that $X^2$ is sulfur, $R^1$ is $C_1$—$C_8$ alkyl, $C_7$—$C_8$ aralkyl, phenyl, allyl, phenyl substituted with fluorine, chlorine, bromine, $C_1$—$C_4$ alkyl, $C_1$—$C_3$ alkoxy, phenoxy, nitro, cyano, trihalomethyl, methylthio or trichloromethylthio, phenoxy substituted with $C_1$—$C_4$ alkyl, trifluoromethyl, methoxy, methylthio, fluorine, chlorine, nitro or cyano or benzyl substituted with $C_1$—$C_2$ alkyl, fluorine, chlorine, bromine, $C_1$—$C_2$ alkoxy, trifluoromethyl, methylenedioxy, nitro or cyano, $R^2$ is hydrogen, $C_1$—$C_4$ alkyl, phenyl or phenyl substituted with $C_1$—$C_2$ alkyl, $C_1$—$C_2$ alkoxy, methylenedioxy, fluorine, chlorine, bromine, nitro or cyano; $R^3$ and $R^4$ are the same or different and are $C_1$—$C_3$ alkyl, and Y is oxygen or sulfur.

3. A compound according to claim 2 characterised in that X and Y are oxygen; $R^1$ is $C_1$—$C_4$ alkyl, benzyl, phenyl or phenyl substituted with fluorine, chlorine, methyl, methoxy, nitro, cyano or trifluoromethyl; $R^2$ is hydrogen or methyl; $R^3$ and $R^4$ are the same or different and are methyl or ethyl; and $X^1$ is sulfur.

4. A method for controlling insects characterised in that the method includes the use of an insecticidally effective amount of a compound as claimed in any of the preceding claims.

5. A method for controlling mites characterised in that the method includes the use of a miticidally effective amount of a compound having the structural formula

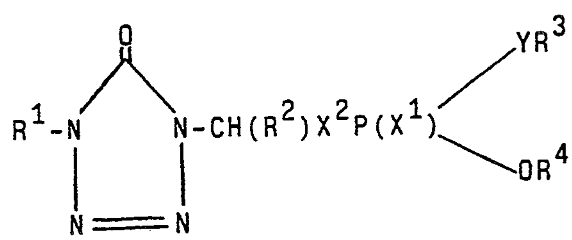

where $R^1$ is benzyl, phenyl, 2-fluorophenyl, 3-chlorophenyl, 4-iodophenyl, phenoxyphenyl or ethoxycarbonylphenyl; $R^2$ is hydrogen, methyl or phenyl; $R^3$ and $R^4$ are the same or different and are methyl or ethyl; $X^1$ and $X^2$ are both sulfur; and Y is oxygen.

6. A method according to claim 5 characterised in that $R^1$ is benzyl, phenyl or ethoxycarbonylphenyl; and $R^2$ is hydrogen or phenyl.

7. A pesticidal composition characterised in that it comprises a compound as claimed in any of claims 1 to 3 and a carrier or diluent therefor.

8. A process for synthesizing a compound as claimed in any of claims 1 to 3 characterised in that the process comprises (a) reacting a 1-substituted-5(4H)-tetrazolinone with an aldehyde and thionyl chloride at a temperature between 8° and 130°C to form an intermediate compound having the formula

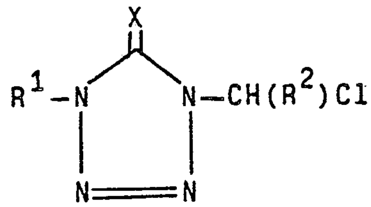

and (b) thereafter reacting said intermediate compound with a compound having the formula

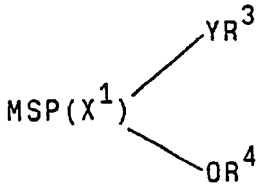

where M is a cation based on an alkali metal or ammonia, said reaction occurring at a temperature in the range of between −20° and 100°C; $R^1$ to $R^4$, X, $X^1$ and Y being as defined in claims 1 to 3.

9. A process according to claim 8 characterised in that said aldehyde is present in an amount in the range of between equivalency and one equivalent excess based on the amount of tetrazolinone reacted.

10. A process according to claim 8 or claim 9 characterised in that said thionyl chloride is present in an amount in the range of between equivalency and one equivalent excess based on the amount of said tetrazolinone reacted.

11. A process according to any of claims 8 to 10 characterised in that said step (a) occurs at a temperature in the range of between 70°C and 120°C and said step (b) occurs at a temperature in the range of between room temperature and 50°C.

12. A process according to any of claims 8 to 11 characterised in that step (a) of said reaction occurs in solution employing a solvent inert to the reactants.

13. A process according to claim 12 characterised in that said solvent is diethylether, diisopropylether, dioxane, dimethoxyethane, tetrahydrofuran, an N,N-dialkylated carboxamide, hexane, benzene, toluene, xylene, methylene chloride, chloroform, carbon tetrachloride, chlorobenzene, acetonitrile or dimethylsulfoxide.

14. A process according to any of claims 8 to 13 characterised in that said salt of said O,O-dialkyldithiophosphate is present in an amount in the range of equivalency and 50% excess based on the amount of said intermediate compound.

15. A process according to claim 14 characterised in that said salt of said O,O-dialkyldithiophosphate is the sodium, potassium or ammonium salt of O,O-dialkylthiophosphate.

16. A process according to any of claims 8 to 15 characterised in that said step (b) occurs in a solvent inert to said reactants.

17. A process according to claim 16 characterised in that said solvent is acetone, methyl, ethyl ketone, methanol, ethanol, diethylether, diisopropylether, dioxane, dimethoxyethane, tetrahydrofuran, N,N-dialkylated carboxamides, hexane, benzene, toluene, zylene, methylene chloride, chloroform, carbon tetrachloride, chlorobenzene, acetonitrile or dimethylsulfoxide.

**Patentansprüche**

1. Verbindung, dadurch gekennzeichnet, daß sie die Strukturformel

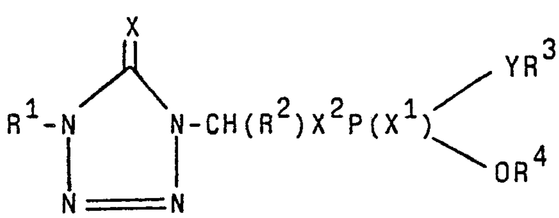

hat, worin X, $X^1$ und $X^2$ gleich oder verschieden sind und Sauerstoff oder Schwefel bedeuten; Y Sauerstoff, Schwefel oder NH bedeutet; $R^1$ $C_1$- bis $C_{12}$-Alkyl, $C_7$- bis $C_9$-Aralkyl, $C_2$- bis $C_4$-Alkenyl, Phenyl, Phenyl, das mit Halogen, $C_1$- bis $C_4$-Alkyl, $C_1$- bis $C_2$-Halogenalkyl, $C_1$- bis $C_4$-Alkoxy, $C_1$- bis $C_4$-Halogenalkoxy, $C_1$- bis $C_4$-Alkylthio, $C_1$- bis $C_4$-Halogenalkylthio, $C_2$- bis $C_5$-Alkoxycarbonyl, Phenoxy, Nitro oder Cyano substituiert ist, Phenoxy, das mit Halogen $C_1$- bis $C_4$-Alkyl, $C_1$- bis $C_2$-Halogenalkyl, $C_1$- bis $C_4$-Alkoxy, $C_1$- bis $C_4$-Halogenalkoxy, $C_1$- bis $C_4$-Alkylthio, $C_1$- bis $C_4$-Halogenalkylthio, $C_2$- bis $C_5$-Alkoxycarbonyl, Nitro oder Cyano substituiert ist, oder $C_7$- bis $C_9$-Aralkyl, das an dem Phenylring mit Halogen, $C_1$- bis $C_4$-Alkyl, $C_1$- bis

$C_2$-Halogenalkyl, $C_1$- bis $C_4$-Alkoxy, Methylendioxy, Nitro oder Cyano substituiert ist, bedeutet; $R^2$ Wasserstoff, $C_1$- bis $C_4$-Alkyl, Phenyl oder Phenyl, das mit $C_1$- bis $C_4$-Alkyl, $C_1$- bis $C_4$-Alkoxy, Methylendioxy, Halogen, Nitro oder Cyano substituiert ist, bedeutet und $R^3$ und $R^4$ gleich oder verschieden sind und $C_1$- bis $C_4$-Alkyl bedeuten.

2. Verbindung nach Anspruch 1, dadurch gekennzeichnet, daß $X^2$ Schwefel bedeutet; $R^1$ $C_1$- bis $C_8$-Alkyl, $C_7$- bis $C_8$-Aralkyl, Phenyl, Allyl, Phenyl, das mit Fluor, Chlor, Brom, $C_1$- bis $C_4$-Alkyl, $C_1$- bis $C_3$-Alkoxy, Phenoxy, Nitro, Cyano, Trihalogenmethyl, Methylthio oder Trichloromethylthio substituiert ist, Phenoxy, das mit $C_1$- bis $C_4$-Alkyl, Trifluormethyl, Methoxy, Methylthio, Fluor, Chlor, Nitro oder Cyano substituiert ist, oder Benzyl, das mit $C_1$- bis $C_2$-Alkyl, Fluor, Chlor, Brom, $C_1$- bis $C_2$-Alkoxy, Trifluormethyl, Methylendioxy, Nitro oder Cyano substituiert ist, bedeutet; $R^2$ Wasserstoff, $C_1$- bis $C_4$-Alkyl, Phenyl oder Phenyl, das mit $C_1$- bis $C_2$-Alkyl, $C_1$- bis $C_2$-Alkoxy, Methylendioxy, Fluor, Chlor, Brom, Nitro oder Cyano substituiert ist, bedeutet; $R^3$ und $R^4$ gleich oder verschieden sind und $C_1$- bis $C_3$-Alkyl bedeuten und Y Sauerstoff oder Schwefel bedeutet.

3. Verbindung nach Anspruch 2, dadurch gekennzeichnet, daß X und Y Sauerstoff bedeuten; $R^1$ $C_1$- bis $C_4$-Alkyl, Benzyl, Phenyl oder Phenyl, das mit Fluor, Chlor, Methyl, Methoxy, Nitro, Cyano oder Trifluormethyl substituiert ist, bedeutet; $R^2$ Wasserstoff oder Methyl bedeutet; $R^3$ und $R^4$ gleich oder verschieden sind und Methyl oder Ethyl bedeuten und $X^1$ Schwefel bedeutet.

4. Verfahren zur Bekämpfung von Insekten, dadurch gekennzeichnet, daß bei dem Verfahren eine zur Insektenvertilgung wirksame Menge einer Verbindung nach einem der vorhergehenden Ansprüche verwendet wird.

5. Verfahren zur Bekämpfung von Milben, dadurch gekennzeichnet, daß bei dem Verfahren eine zur Milbenvertilgung wirksame Menge einer Verbindung mit der Strukturformel

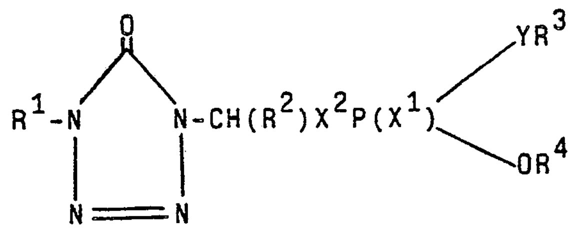

worin $R^1$ Benzyl, Phenyl, 2-Fluorphenyl, 3-Chlorphenyl, 4-Iodphenyl, Phenoxyphenyl oder Ethoxycarbonylphenyl bedeutet; $R^2$ Wasserstoff, Methyl oder Phenyl bedeutet; $R^3$ und $R^4$ gleich oder verschieden sind und Methyl oder Ethyl bedeuten; $X^1$ und $X^2$ beide Schwefel bedeuten und Y Sauerstoff bedeutet, verwendet wird.

6. Verfahren nach Anspruch 5, dadurch gekennzeichnet, daß $R^1$ Benzyl, Phenyl oder Ethoxycarbonylphenyl bedeutet und $R^2$ Wasserstoff oder Phenyl bedeutet.

7. Schädlingsbekämpfungsmittel, dadurch gekennzeichnet, daß es eine Verbindung nach einem der Ansprüche 1 bis 3 und einen Träger oder ein Verdünnungsmittel dafür enthält.

8. Verfahren zum Synthetisieren einer Verbindung nach einem der Ansprüche 1 bis 3, dadurch gekennzeichnet, daß bei dem Verfahren (a) ein in 1-Stellung substituiertes 5(4H)-Tetrazolinon bei einer Temperatur zwischen 8 und 130°C mit einem Aldehyd und Thionylchlorid umgesetzt wird, um eine Zwischenverbindung mit der Formel

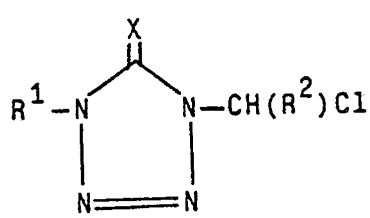

zu bilden, und (b) die Zwischenverbindung danach mit einer Verbindung mit der Formel

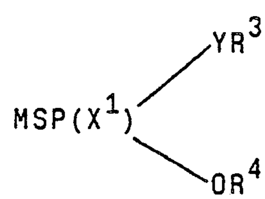

worin M ein Kation auf Basis eines Alkalimetalls oder von Ammoniak ist, umgesetzt wird, wobei die Umsetzung bei einer Temperatur zwischen −20 und 100°C stattfindet; wobei $R^1$ bis $R^4$, X, $X^1$ und Y die in den Ansprüchen 1 bis 3 definierte Bedeutung haben.

9. Verfahren nach Anspruch 8, dadurch gekennzeichnet, daß der Aldehyd in einer Menge vorhanden ist, die zwischen der äquivalenten Menge und einen Überschuß von einem Äquivalent, bezogen auf die umgesetzte Menge des Tetrazolinons, liegt.

10. Verfahren nach Anspruch 8 oder Anspruch 9, dadurch gekennzeichnet, daß das Thionylchlorid in einer Menge vorhanden ist, die zwischen der äquivalenten Menge und einem Überschuß von einem Äquivalent, bezogen auf die umgesetzte Menge des Tetrazolinons, liegt.

11. Verfahren nach einem der Ansprüche 8 bis 10, dadurch gekennzeichnet, daß Schritt (a) bei einer Temperatur zwischen 70 und 120°C und Schritt (b) bei einer Temperatur zwischen Raumtemperatur und 50°C stattfindet.

12. Verfahren nach einem der Ansprüche 8 bis 11, dadurch gekennzeichnet, daß Schritt (a) der Umsetzung in Lösung stattfindet, wobei ein Lösungsmittel verwendet wird, das gegenüber den Reaktionsteilnehmern inert ist.

13. Verfahren nach Anspruch 12, dadurch gekennzeichnet, daß das Lösungsmittel Diethylether, Diisopropylether, Dioxan, Dimethoxyethan, Tetrahydrofuran, ein N,N-dialkyliertes Carboxamid, Hexan, Benzol, Toluol, Xylol, Methylenchlorid, Chloroform, Tetrachlorkohlenstoff, Chlorbenzol, Acetonitril oder Dimethylsulfoxid ist.

14. Verfahren nach einem der Ansprüche 8 bis 12, dadurch gekennzeichnet, daß das Salz es O,O-Dialkyldithiophosphats in einer Menge vorhanden ist, die zwischen der äquivalenten Menge und einem 50%igen Überschuß, bezogen auf die Menge der Zwischenverbindung, liegt.

15. Verfahren nach Anspruch 14, dadurch gekennzeichnet, daß das Salz des O,O-Dialkyldithiophosphats das Natrium-, Kalium- oder Ammoniumsalz des O,O-Dialkyldithiophosphats ist.

16. Verfahren nach einem der Ansprüche 8 bis 15, dadurch gekennzeichnet, daß Schritt (b) in einem Lösungsmittel stattfindet, das gegenüber den Reaktionsteilnehmern inert ist.

17. Verfahren nach Anspruch 16, dadurch gekennzeichnet, daß das Lösungsmittel Aceton, Methylethylketon, Methanol, Ethanol, Diethylether, Diisopropylether, Dioxan, Dimethoxyethan, Tetrahydrofuran, ein N,N-dialkyliertes Carboxamid, Hexan, Benzol, Toluol, Xylol, Methylenchlorid, Chloroform, Tetrachlorkohlenstoff, Chlorbenzol, Acetonitril oder Dimethylsulfoxid ist.

**Revendications**

1. Composé caractérisé en ce qu'il a la formule de structure

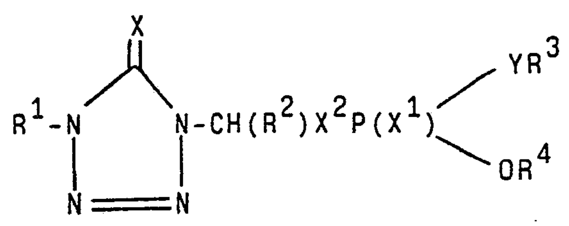

dans laquelle X, $X^1$ et $X^2$ sont identiques ou différents et sont oxygène ou soufre; Y est oxygène, soufre ou NH; $R^1$ est alkyle $C_1$—$C_{12}$; aralkyle $C_7$—$C_9$, alkényle $C_2$—$C_4$, phényle, phényle substitué par halogène, alkyle $C_1$—$C_4$, haloalkyle $C_1$—$C_2$, alcoxy $C_1$—$C_4$, haloalcoxy $C_1$—$C_4$, alkylthio $C_1$—$C_4$, haloalkylthio $C_1$—$C_4$, alcoxycarbonyle $C_2$—$C_5$, phénoxy, nitro, ou cyano, phénoxy substitué par halogène, alkyle $C_1$—$C_4$, haloalkyle $C_1$—$C_2$, alcoxy $C_1$—$C_4$, haloalcoxy $C_1$—$C_4$, alkylthio $C_1$—$C_4$, haloalkylthio $C_1$—$C_4$, alcoxycarbonyle $C_2$—$C_5$, nitro ou cyano ou bien aralkyle $C_7$—$C_9$ substitué sur le noyau phényle par halogène, alkyle $C_1$—$C_4$, haloalkyle $C_1$—$C_2$, alcoxy $C_1$—$C_4$, méthylènedioxy, nitro ou cyano; $R^2$ est hydrogène, alkyle $C_1$—$C_4$, phényle ou phényle substitué par alkyle $C_1$—$C_4$, alcoxy $C_1$—$C_4$, méthylènedioxy, halogène, nitro ou cyano; et $R^3$ et $R^4$ sont identiques ou différents et sont alkyle $C_1$—$C_4$.

2. Composé selon la revendication 1 caractérisé en ce que $X^2$ est soufre; $R^1$ est alkyle $C_1$—$C_8$, aralkyle $C_7$—$C_8$, phényle, allyle, phényle substitué par fluor, chlore, brome, alkyle $C_1$—$C_4$, alcoxy $C_1$—$C_3$, phénoxy, nitro, cyano, trihalométhyle, méthylthio ou trichlorométhylthio, phénoxy substitué par alkyle $C_1$—$C_4$, trifluorométhyle, méthoxy, méthylthio, fluor, chlore, nitro ou cyano ou benzyle substitué par alkyle $C_1$—$C_2$, fluor, chlore, brome, alcoxy $C_1$—$C_2$ trifluorométhyle, méthylènedioxy, nitro ou cyano; $R^2$ est hydrogène, alkyle $C_1$—$C_4$, phényle ou phényle substitué par alkyle $C_1$—$C_2$, alcoxy $C_1$—$C_2$, méthylènedioxy, fluor, chlore, brome, nitro ou cyano; $R^3$ et $R^4$ sont identiques ou différents et sont alkyle $C_1$—$C_3$ et Y est oxygène ou soufre.

3. Composé selon la revendication 2 caractérisé en ce que X et Y sont oxygène; $R^1$ est alkyle $C_1$—$C_4$, benzyle, phényle ou phényle substitué par fluor, chlore, méthyle, méthoxy, nitro, cyano ou trifluorométhyle; $R^2$ est hydrogène ou méthyle; $R^3$ et $R^4$ sont identiques ou différents et sont méthyle ou éthyle; et $X^1$ est soufre.

4. Méthode pour contrôler les insectes caractérisée en ce que la méthode comprend l'utilisation d'une quantité insecticidement efficace d'un composé selon l'une quelconque des revendications précédentes.

5. Méthode pour contrôler les mites caractérisée en ce que la méthode comprend l'utilisation d'une quantité miticidement efficace d'un composé ayant la formule de structure

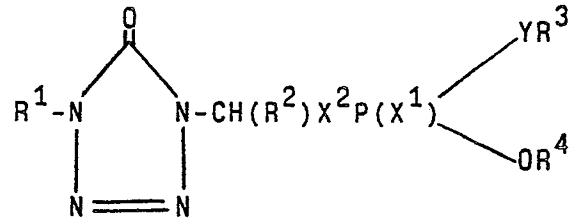

où $R^1$ est benzyle, phényle, 2-fluorophényle, 3-chlorophényle, 4-iodophényle, phénoxyphényle ou éthoxycarbonylphényle; $R^2$ est hydrogène, méthyle ou phényle; $R^3$ et $R^4$ sont identiques ou différents et sont méthyle ou éthyle; $X^1$ et $X^2$ sont tous deux soufre; et Y est oxygène.

6. Méthode selon la revendication 5 caractérisée en ce que $R^1$ est benzyle, phényle ou éthoxycarbonylphényle; et $R^2$ est hydrogène ou phényle.

7. Composition pesticide caractérisée en ce qu'elle comprend un composé selon l'une quelconque des revendications 1 à 3 et son véhicule ou diluant.

8. Procédé pour la synthèse d'un composé selon l'une quelconque des revendications 1 à 3 caractérisé en ce que le procédé comprend (a) la réaction d'une 5(4H)-tétrazoline 1-substituée avec un aldéhyde et un chlorure de thionyle à une température entre 8° et 130°C pour former un composé intermédiaire ayant la formule

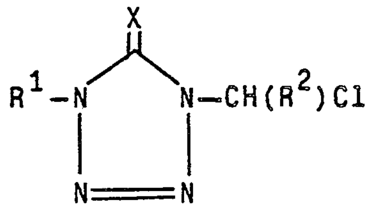

et (b) ensuite la réaction dudit composé intermédiaire avec un composé ayant la formule

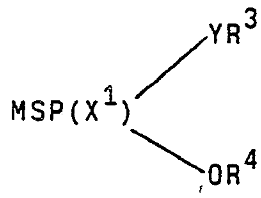

où M est un cation basé sur un métal alcalin ou de l'ammoniac, ladite réaction se produisant à une température comprise entre −20° et 100°C; $R^1$ à $R^4$, X, $X^1$ et Y étant tels que définis aux revendications 1 à 3.

9. Procédé selon la revendication 8 caractérisé en ce que ledit aldéhyde est présent en une quantité comprise entre environ l'équivalence et un équivalent en excès en se basant sur la quantité de tétrazoline ayant réagi.

10. Procédé selon la revendication 8 ou la revendication 9 caractérisé en ce que ledit chlorure de thionyle est présent en une quantité comprise entre l'équivalance et un équivalent en excès en se basant sur la quantité de ladite tétrazoline ayant réagi.

11. Procédé selon l'une quelconque des revendications 8 à 10 caractérisé en ce que ladite étape (a) se produit à une température comprise entre 70°C et 120°C et ladite étape (b) se produit à une température comprise entre la température ambiante et 50°C.

12. Procédé selon l'une quelconque des revendications 8 à 11 caractérisé en ce que l'étape (a) de ladite réaction se produit en solution en employant un solvant inerte aux réactifs.

13. Procédé selon la revendication 12 caractérisé en ce que ledit solvant est le diéthyl éther, le diisopropyléther, le dioxane, le diméthoxyéthane, le tétrahydrofurane, un carboxamide N,N-dialkylé, de l'hexane, du benzène, du toluène, du xylène, du chlorure de méthylène, du chloroforme, du tétrachlorure de carbone, du chlorobenzène, de l'acétonitrile ou du diméthylsulfoxyde.

14. Procédé selon l'une quelconque des revendications 8 à 13 caractérisé en ce que ledit sel dudit O,O-dialkyldithiophosphate est présent en une quantité comprise entre l'équivalence et un excès de 50% en se basant sur la quantité dudit composé intermédiaire.

15. Procédé selon la revendication 14 caractérisé en ce que ledit sel dudit O,O-dialkyldithiophosphate est le sel de sodium, potassium ou ammonium du O,O-dialkyldithiophosphate.

16. Procédé selon l'une quelconque des revendications 8 à 15 caractérisé en ce que ladite étape (b) se produit dans un solvant inerte auxdits réactifs.

17. Procédé selon la revendication 16 caractérisé en ce que ledit solvant est l'acétone, la méthyl éthyl cétone, le méthanol, l'éthanol, le diéthyléther, le diisopropyléther, le dioxane, le diméthoxyéthane, le tétrahydrofuranne, le carboxamide, N,N-dialkylé, l'hexane, le benzène, le toluène, le xylène, le chlorure de méthylène, le chloroforme, le tétrachlorure de carbone, le chlorobenzène, l'acétonitrile ou le diméthylsulfoxyde.